# EUROPEAN PATENT APPLICATION

(11) **EP 2 930 052 A2**
(43) Date of publication of application: **14.10.2015**
(21) Application number: 15162607.4
(22) Date of filing: 07.04.2015
(51) Int. Cl.: B60L 11/18

(54) **FUEL CELL HYBRID SYSTEM**

(30) Priority: 08.04.2014 KR 20140041823
(71) Applicant: Samsung SDI Co., Ltd., Gyeonggi-do 446-902 (KR)
(72) Inventor: Kim, Dong-Rak, Gyeonggi-do 446-902 (KR); Park, Jeong-Kurn, Gyeonggi-do 446-902 (KR); Choi, Jong-Rock, Gyeonggi-do 446-902 (KR); Song, In-Seob, Gyeonggi-do 446-902 (KR)
(74) Representative: Gulde & Partner

(57) **Abstract**

A fuel cell hybrid system includes a fuel cell pack and a hybrid battery pack. The hybrid battery pack includes a high voltage battery, a low voltage battery, a bidirectional converter to perform power conversion between the high and low voltage batteries, and a battery manager. The battery manger enters a low temperature charging mode based on an internal temperature of the hybrid battery pack, and charges one of the high or low voltage batteries using the other of the high or low voltage batteries through the bidirectional converter in the low temperature charging mode. The battery manager may perform the charging operation based on a state of charge of each of the batteries. The fuel cell pack may supply power to a motor of a vehicle, and the hybrid battery pack may supply voltage to the motor and the fuel cell pack.

## Description

### BACKGROUND

### 1. Field

The present invention relates to a fuel cell hybrid system.

### 2. Description of the Related Art

A fuel cell stack is a power source that directly converts chemical energy into electrical energy. A typical fuel cell stack includes a plurality of unit cells, each of which includes electrolytes between anode and cathode electrodes. In operation, hydrogen and oxygen are respectively provided to the anode and cathode to generate electricity based on a chemical reaction of ionized materials.

A fuel cell stack is of interest because it does not use fossil fuels to provide power. Also, fuel cell stacks do not have or discharge hazardous materials and have relatively high power generating efficiency. For these reasons fuel cell stacks have been used as a power source for electric and hybrid vehicles.

For all of their apparent advantages, existing fuel cell systems have a number of drawbacks. For example, existing fuel cell systems generate a constant output of electrical energy. As a result, the output of fuel cell stacks cannot be abruptly changed to satisfy load variations. For example, when instantaneous high power is required for the load, existing fuel cell systems cannot respond at a sufficiently rapid rate.

In an attempt to overcome this drawback, a fuel cell hybrid system has been developed which includes a fuel cell stack and a battery. When instantaneous high power is required for the load, the battery is used, instead of the fuel cell stack, to supply power to the load. However, existing fuel cell hybrid systems have also proven to be unsatisfactory for many applications.

### SUMMARY

In accordance with one embodiment, a fuel cell hybrid system includes a fuel cell pack to supply power to a motor of a vehicle; and a hybrid battery pack to supply a battery voltage to the motor and the fuel cell pack, wherein the hybrid battery pack includes: a high voltage battery; a low voltage battery; a bidirectional converter configured to perform power conversion between the high and low voltage batteries; and a battery management unit configured to enter a low temperature charging mode based on internal temperature of the hybrid battery pack, and to charge one of the high or low voltage batteries using the other of the high or low voltage batteries through the bidirectional converter in the low temperature charging mode and depending on a state of charge (SOC) value of each of the high and low voltage batteries.

The battery management unit may charge one battery having a low SOC value from the other battery having a high SOC value among the high and low voltage batteries in the low temperature charging mode.

The battery management unit may enter the low temperature charging mode when the internal temperature is lower than a preset reference internal temperature when the vehicle is turned off and to deactivate the low temperature charging mode when the vehicle is turned on. The preset reference internal temperature may be between -10 °C and 10 °C, inclusive.

The battery management unit may control a charging amount based on a comparison of the internal temperature with a previous internal temperature, when one of the high or low voltage batteries is charged in the low temperature charging mode.

The battery management unit may increase the charging amount when the internal temperature is not increased from the previous internal temperature. The battery management unit may control a charging cycle based on a comparison of the internal temperature with a preset target temperature, when the internal temperature is increased from the previous internal temperature. The battery management unit may increase the charging cycle when the internal temperature is lower than the target temperature. The target temperature may be between 10 °C and 30 °C, inclusive.

The fuel cell pack may enter a low temperature ambient mode to supply the power to the high voltage battery when an ambient temperature outside of the vehicle is lower than a preset ambient temperature when the vehicle is turned off. The reference ambient temperature may be between -10 °C and 10 °C, inclusive.

The fuel cell pack may output the power in the low temperature ambient mode until the SOC value of each of the high and low voltage batteries reach a corresponding preset target SOC value. The target SOC value may be set to exceed 80 % of full-charge capacity. The battery management unit may charge the low voltage battery from the high voltage battery in the low temperature ambient mode. The hybrid battery pack may include an external case including the high and low voltage batteries and at least one open region, and a heat dissipating device to physically open and close the at least one open region.

The battery management unit may enter a heat insulating mode to close the open region through the heat dissipating device when the internal temperature is lower than an ambient temperature outside of the vehicle, and to enter a heat dissipating mode to open the open region through the heat dissipating device when the internal temperature is higher than the ambient temperature.

In accordance with another embodiment, a hybrid battery pack includes a first battery and a battery manager to charge the first battery to generate an amount of heat when an internal temperature of the hybrid battery pack is below a first temperature, the amount of heat sufficient to maintain the internal temperature of the battery pack above a second temperature in order to achieve a predetermined battery capacity. The first temperature may be different from the second temperature.

The battery manager is to terminate charging of the first battery when the internal temperature exceeds the second temperature. The battery manager is to charge the first battery using a second battery in the hybrid battery pack.

### BRIEF DESCRIPTION OF THE DRAWINGS

Features will become apparent to those of skill in the art by describing in detail exemplary embodiments with reference to the attached drawings in which:
FIG. 1 illustrates an embodiment of a fuel cell hybrid system;
FIG. 2 illustrates an embodiment of a hybrid battery pack;
FIG. 3 illustrates a method for driving a fuel cell hybrid system; and
FIG. 4 illustrates an example of battery capacity based on temperature.

### DETAILED DESCRIPTION

Example embodiments are described more fully hereinafter with reference to the accompanying drawings.

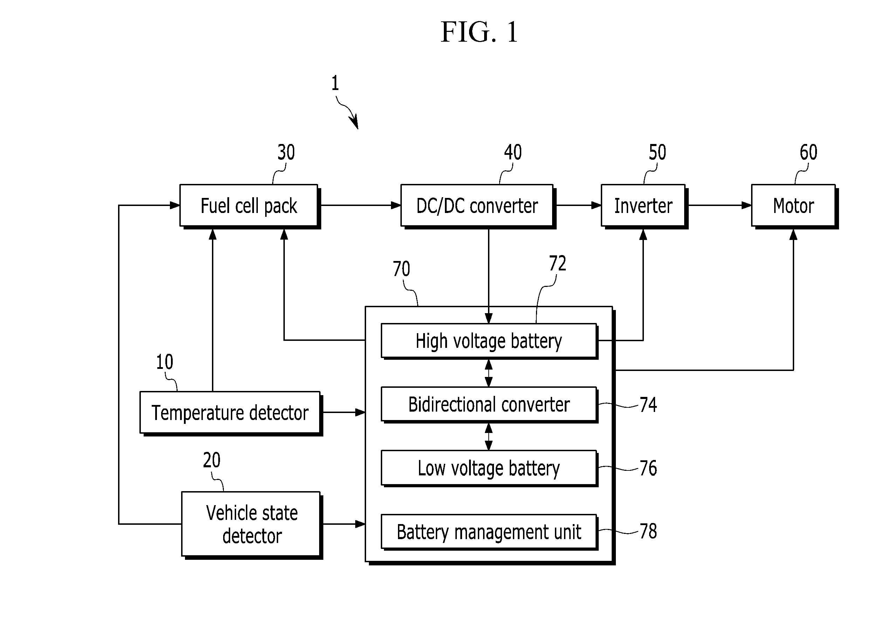

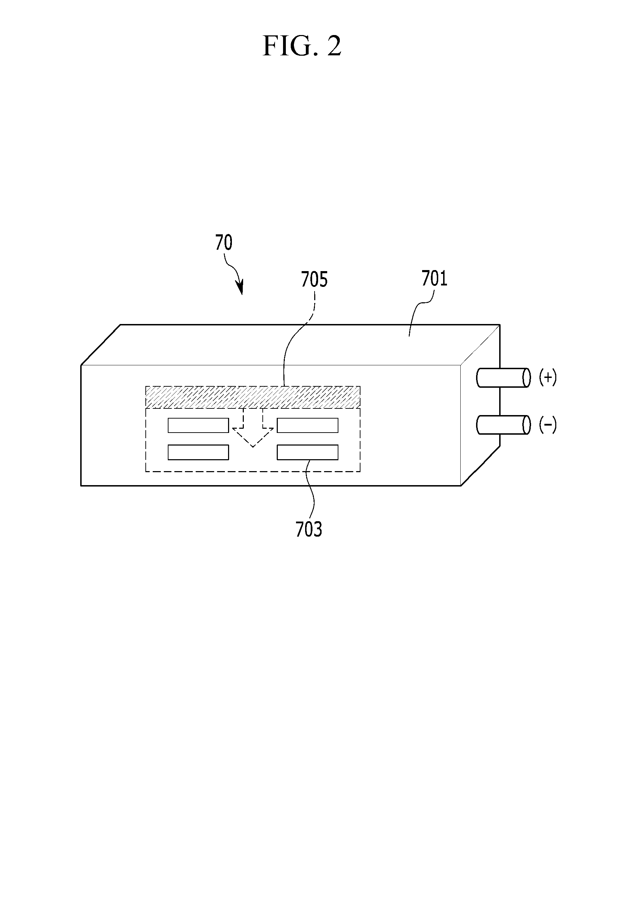

FIG. 1 illustrates an embodiment of a fuel cell hybrid system, and FIG. 2 illustrates an embodiment of a hybrid battery pack. The hybrid battery pack may correspond to the hybrid battery pack 70 in FIG. 1, or the hybrid battery pack may be included in a different type of pack, system, or device. Also, the fuel cell hybrid system and hybrid battery pack are illustrated as a power source for a vehicle. However, the system and pack may be used in other applications.

Referring to FIG. 1, the fuel cell hybrid system 1 includes a temperature detector 10, a vehicle state detector 20, a fuel cell pack 30; a DC/DC converter 40; an inverter 50; a motor 60; and a hybrid battery pack 70.

The temperature detector 10 detects an ambient temperature outside the vehicle and an internal temperature of the hybrid battery pack 70. The temperature detector 10 may include one or a plurality of temperature sensors outside the vehicle and/or disposed in the hybrid battery pack 70.

The vehicle state detector 20 detects a turn-on/off state of the vehicle and generates information indicative of this state. The vehicle state detector 20 may perform this operation, for example, based on whether an ignition key of the vehicle is activated and/or based on one or more other conditions.

The fuel cell pack 30 receives fuel and an oxidant from a fuel storage unit and an oxidant supply unit to produce DC power. The fuel cell pack 30 produces DC power which, for example, corresponds to an output (e.g., average output) or other parameter of the motor 60. The fuel may include a hydrocarbon-based fuel such as methanol, ethanol, natural gas, liquefied natural gas (LPG), etc., which exist in a liquefied or gaseous state. The oxidant may include, for example, oxygen gas or air.

The fuel cell pack 30 may produce DC power by various methods. For example, a polymer electrode membrane fuel cell (PEMFC) scheme or direct oxidation fuel cell (DOFC) scheme may be used. The PEMFC scheme refers to a method in which fuel is reformed to generate hydrogen, and then the hydrogen electrochemically reacts with oxygen to generate DC power. The DOFC scheme refers to a method in which liquid fuel or gas fuel reacts directly with oxygen in a unit cell to generate DC power.

The fuel cell pack 30 may be configured to enter a low temperature ambient mode depending on an ambient temperature when turning off the vehicle, and to supply constant DC power to the hybrid battery pack 70 through the DC/DC converter 40.

For example, the fuel cell pack 30 may enter a low temperature ambient mode when ambient temperature is lower than a preset reference temperature when turning off the vehicle, and to receive information indicative of a state of charge (SOC) value of a high voltage battery 72 and a low voltage battery 76 from the hybrid battery pack 70 in the low temperature ambient mode. The preset ambient temperature may be, for example, between -10 °C and 10 °C, inclusive.

In addition, the fuel cell pack 30 may be driven to continuously generate DC power until the SOC value of each of the high and low voltage batteries 72 and 76 reaches a target SOC value. In this case, the target SOC value may be set to exceed a predetermined percentage (e.g., 80 %) of full-charge capacity.

The DC/DC converter 40 converts the DC power of the fuel cell pack 30 into a predetermined level and transmit it to the inverter 50 or the hybrid battery pack 70. The DC/DC converter 40 converts the DC power into a required level for driving the motor 60 and transmit it to the inverter 50 in a driving mode of the vehicle, and converts the DC power of the fuel cell pack 30 into a required level for charging the high voltage battery 72 and transmit it to the hybrid battery pack 70.

For illustrative purposes, a case in which the DC/DC converter 40 transmits DC power to the high voltage battery 72 of the hybrid battery pack 70 will be discussed.

In this case, the inverter 50 converts DC power respectively output from the fuel cell pack 30 and the hybrid battery pack 70 to AC power for the motor 60. The motor 60 is used as a power source of the vehicle, and rotates according to the AC power transmitted through the inverter 50.

The hybrid battery pack 70 supplies power required to drive the fuel cell pack 30 and the motor 60. The hybrid battery pack 70 supplies constant DC power to the motor 60 through the inverter 50 in a high power mode of the motor 60. The high power mode of the motor 60 may correspond, for example, to a mode that is entered when the motor 60 requires a relatively large amount of current, e.g., when the vehicle goes up a hill, when the vehicle is required to suddenly accelerate, etc.

The hybrid battery pack 70 may enter the low temperature charging mode when the internal temperature falls below a preset reference internal temperature when turning off the vehicle. The internal temperature may be increased to the target level using heat generated as a result of charging and discharging operations for the high and low voltage batteries 72 and 76. The reference internal temperature may be, for example, between -10 °C and 10 °C, inclusive. The target temperature may be set, for example, to room temperature, e.g., between 10 °C and 30 °C inclusive.

For example, the hybrid battery pack 70 may use chemical heat generated from a reaction between positive and negative electrodes of the high and low voltage batteries 72 and 76 as charging and discharging between the high and low voltage batteries 72 and 76 are performed, and heat generated by internal resistance and switching loss of a bidirectional converter 74. As a result, the internal temperature may be increased.

For this purpose, the hybrid battery pack 70 includes the high voltage battery 72, the bidirectional converter 74, the low voltage battery 76, and a battery management unit 78. The high voltage battery 72 includes a plurality of unit cells, each including a positive electrode, a negative electrode, and a separator forming a chargeable rechargeable battery.

The high voltage battery 72 is a high power battery which has a higher output current than the low voltage battery 76, and which stores a lower amount of electrical energy than the low voltage battery 76. For example, the high voltage battery 72 may have higher output characteristics than the low voltage battery 76 in a low-temperature environment. The high voltage battery 72 may be formed as a pack and may supply a constant DC voltage to the motor 60, along with the fuel cell pack 30, in the high power mode of the motor 60.

The bidirectional converter 74 is between the high and low voltage batteries 72 and 76, and is controlled by the battery management unit 78 to perform power conversion between the high and low voltage batteries 72 and 76.

The battery management unit 78 controls power conversion efficiency and a power conversion direction of the bidirectional converter 74. In an alternative embodiment, the bidirectional converter 74 may be controlled by a higher-level controller of the fuel cell hybrid system 1.

The low voltage battery 76 includes a plurality of unit cells, each including a positive electrode, a negative electrode, and a separator to form a chargeable rechargeable battery. For example, the low voltage battery 76 may be or include a lithium-ion battery. The low voltage battery 76 may be a high-capacity battery that stores higher electrical energy than the high voltage battery 72. The low voltage battery 76 may be formed as a pack and may supply power to a controller for controlling the fuel cell pack 30 and the motor 60, or may supply power to one or more electric loads such as motor driven power steering (MDPS), a radiator fan, a headlight, etc.

The battery management unit 78 controls overall operation of the hybrid battery pack 70, and performs control operations for respectively charging and discharging the high and low voltage batteries 72 and 76. The battery management unit 78 may enter the low temperature charging mode according to the internal temperature of the hybrid battery pack 70 when the vehicle is turned off, and may deactivate the low temperature charging mode when the vehicle is turned on.

The battery management unit 78 measures the SOC value of each of the high and low voltage batteries 72 and 76 in the low temperature charging mode. The battery management unit 78 also performs charging and discharging operations between the high and low voltage batteries 72 and 76 depending on the measured SOC values.

For example, the battery management unit 78 charges one of the high and low voltage batteries (e.g., one having a low SOC value) using the other battery (e.g., one having a high SOC value). In one embodiment, when the SOC value of the high voltage battery 72 is higher than the SOC value of the low voltage battery 76, the battery management unit 78 controls the bidirectional converter 74 in a direction from the high voltage battery 72 to the low voltage battery 76, to charge the low voltage battery 76.

Conversely, when the SOC value of the low voltage battery 76 is greater than the SOC value of the high voltage battery 72, the battery management unit 78 controls the bidirectional converter 74 in a direction from the low voltage battery 76 to the high voltage battery 72, to charge the high voltage battery 72.

The battery management unit 78 may charge the high voltage battery 72 or low voltage battery 76 by a fixed charging amount, and may control the charging amount and charging cycle by comparing the internal temperature with the previous internal temperature whenever the high voltage battery 72 or low voltage battery 76 is charged.

The battery management unit 78 may increase the charging amount when the internal temperature is not increased from the previous internal temperature. In addition, when the internal temperature is increased from the previous internal temperature but does not reach the target temperature, the battery management unit 78 may increase the charging cycle. The battery management unit 78 may include an internal memory for storing the measured internal temperatures whenever the high voltage battery 72 or low voltage battery 76 is charged.

Further, when the ambient temperature is lower than the reference ambient temperature, the battery management unit 78 measures the SOC value of each of the high and low voltage batteries 72 and 76, and transmits information about the measured SOC values to the fuel cell pack 30.

In the low temperature ambient mode, the battery management unit 78 controls the bidirectional converter 74 to respectively charge the high and low voltage batteries 72 and 76 using the DC power of the fuel cell pack 30, until the SOC value of each of the high and low voltage batteries 72 and 76 reaches the target SOC value.

Depending on the ambient temperature and the internal temperature, the battery management unit 78 may enter a heat dissipating mode for discharging the internal heat of the hybrid battery pack 70 or a heat insulating mode for preventing the internal heat from being discharged to the outside. The battery management unit 78 may enter the heat dissipating mode when the internal temperature is higher than the ambient temperature and may enter the heat insulating mode when the internal temperature is lower than the ambient temperature.

For this purpose, the hybrid battery pack 70, as shown in FIG. 2 may include at least one open portion 703 at one region of an external case 701 and may include a heat dissipating device or region 705 for physically opening/closing a plurality of open portions 703.

The battery management unit 78 may upwardly manipulate the heat dissipating device or region 705 to discharge the internal heat of the hybrid battery pack 70 in the heat dissipating mode. The battery management system 78 may downwardly manipulate the heat dissipating device or region 705 to prevent the internal heat of the internal heat of the hybrid battery pack 70 from being discharged to the outside in the heat insulating mode.

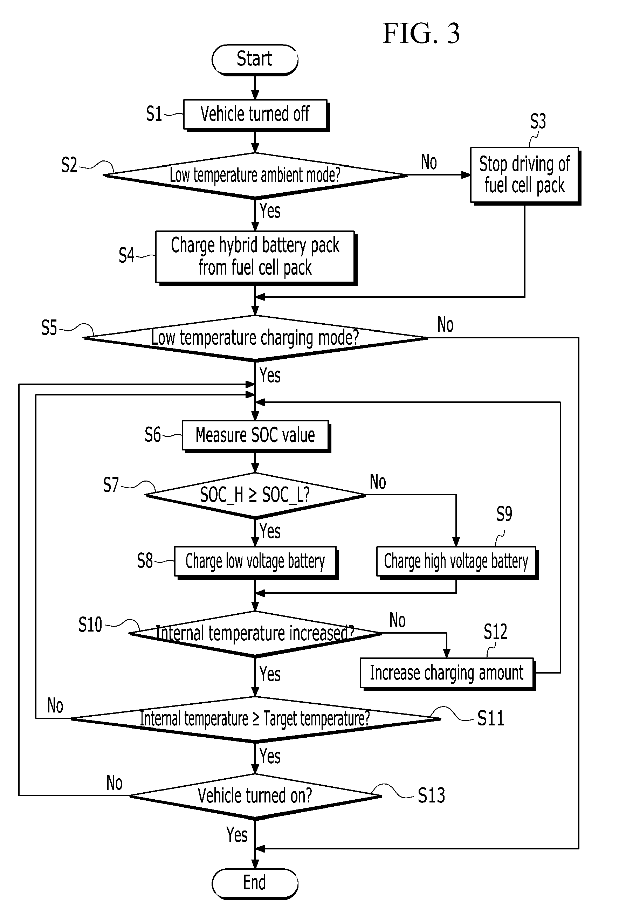

FIG. 3 illustrates an embodiment of a method for driving a fuel cell hybrid system, which, for example, may be the one shown in FIG. 1. Referring to FIG. 3, the method includes converting the state of a vehicle from a driving state to a turn-off state (S1). Next, the vehicle state detector 20 transmits information indicative of the turn-off state of the vehicle to the fuel cell pack 30. Then, the fuel cell pack 30 determines whether the low temperature ambient mode is entered or not depending on the ambient temperature detected by the temperature detector 10 (S2).

When the ambient temperature is higher than the reference ambient temperature, the fuel cell pack 30 stops operating (S3). When the ambient temperature is lower than the reference ambient temperature, the fuel cell pack 30 receives information about the SOC value of each of the high and low voltage batteries 72 and 76 from the battery management unit 78. When the SOC value of each of the high and low voltage batteries 72 and 76 is lower than a target SOC value, the fuel cell pack 30 enters the low temperature ambient mode and continues to operate.

Then, the DC power of the fuel cell pack 30 is transmitted to the high voltage battery 72 through the DC/DC converter 40. The battery management unit 72 charges the low voltage battery 76 from the high voltage battery 72 through the bidirectional converter 74, and stops operation of the bidirectional converter when the SOC value of the low voltage battery 76 is increased to a target SOC value.

The high voltage battery 72 continuously receives the DC power from the fuel cell pack 30, and the fuel cell pack 30 stops operating when the SOC value of the high voltage battery 72 are increased to a target SOC value. Accordingly, the hybrid battery pack 70 is charged to the target SOC value (S4).

In the state described above, the battery management unit 78 determines whether the low temperature charging mode is entered or not depending on the internal temperature of the hybrid battery pack 70 detected by the temperature detector 10 (S5).

The battery management unit 78 enters the low temperature charging mode when the internal temperature is lower than the reference internal temperature, and measures respective SOC values SOC_H and SOC_L of the high and low voltage batteries 72 and 76 (S6).

Next, the battery management unit 78 determines whether the SOC value SOC_H of the high voltage battery 72 is higher than the SOC value SOC_L of the low voltage battery 76 (S7). When the SOC_H of the high voltage battery 72 is higher than the SOC_H of the low voltage battery 76, the battery management unit 78 controls the bidirectional converter 74 to charge the low voltage battery 76 from the high voltage battery 72 (S8). When the SOC_H of the high voltage battery 72 is lower than the SOC_H of the low voltage battery 76, the battery management unit 78 controls the bidirectional converter 74 to charge the high voltage battery 72 from the low voltage battery 76 (S9).

Internal heat is generated due to charging and discharging between the high and low voltage batteries 72 and 76. The battery management unit 78 determines whether the present internal temperature is higher than the previous internal temperature (S10).

When the internal temperature is increased from the previous temperature, the battery management unit 78 determines whether the present internal temperature is increased to the target temperature (S11). When the internal temperature is increased to the target temperature, the battery management unit 78 stops the charging and discharging between the high and low voltage batteries 72 and 76.

When the internal temperature is not increased to the target temperature, the battery management unit 78 reiterates from operation S6, and increases the charging cycle until the present internal temperature is increased to the target temperature.

In operation S10, when the present internal temperature is not increased from the previous internal temperature, the battery management unit 78 increases the charging amount to charge the high voltage battery 72 or low voltage battery 76 (S12).

Next, the battery management unit 78 determines whether the vehicle is in the turn-on state (S13). When the vehicle is converted into the turn-on state, the battery management unit 78 deactivates the low temperature charging mode. When the vehicle is not converted into the turn-on state, the battery management unit 78 reiterates from the operation S6.

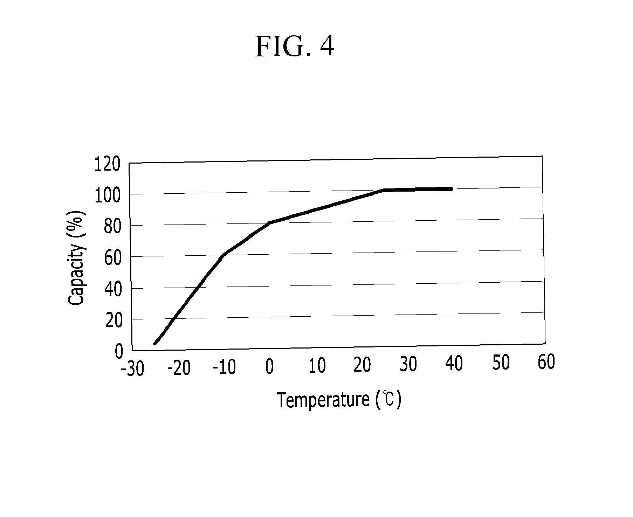

FIG. 4 is a graph illustrating an example of battery capacity based on temperature. Referring to FIG. 4, for at least some operating conditions, battery capacity may drastically decrease when the internal temperature falls below -10 °C, and particularly to less than 10 % of normal output when the internal temperature falls below -20 °C.

However, in accordance with one or more of the aforementioned embodiments, the internal heat generated inside the hybrid battery pack 70 is used to maintain the internal temperature to within a predetermined range (e.g., above 10 °C or more), even when the internal temperature falls below -20 °C, thereby assuring a battery capacity characteristic of more than 80 %. For example, when the vehicle is turned off and the internal temperature falls below the reference internal temperature, the hybrid battery pack uses the internal heat generated by the charging and discharging between the high and low voltage batteries 72 and 76 to maintain the internal temperature above the room temperature. Thus, when the vehicle converts to the turn-on state, the hybrid battery pack 70 may be driven in a normal manner.

In addition, because the internal temperature of the hybrid battery pack 70 is maintained above the room temperature without using an electric heater or hot water, the price, volume, and weight of the hybrid battery pack 70 may not be increased.

In addition, because the heat dissipating mode and the heat insulating mode used to maintain the internal temperature and the charging/discharging amount between the high and low voltage batteries 72 and 76 are used to control a heat value, the risk of explosion as a result of increased internal temperature may be prevented.

The methods and processes described herein may be performed by code or instructions to be executed by a computer, processor, manager, or controller. Because the algorithms that form the basis of the methods (or operations of the computer, processor, or controller) are described in detail, the code or instructions for implementing the operations of the method embodiments may transform the computer, processor, or controller into a special-purpose processor for performing the methods described herein.

Also, another embodiment may include a computer-readable medium, e.g., a non-transitory computer-readable medium, for storing the code or instructions described above. The computer-readable medium may be a volatile or non-volatile memory or other storage device, which may be removably or fixedly coupled to the computer, processor, or controller which is to execute the code or instructions for performing the method embodiments described herein.

## Claims

1. A fuel cell hybrid system (1), comprising:
a fuel cell pack (30) to supply power to a motor (60) of a vehicle; and
a hybrid battery pack (70) to supply a battery voltage to the motor (60) and the fuel cell pack (30), wherein the hybrid battery pack (70) includes:
a high voltage battery (72);
a low voltage battery (76);
a bidirectional converter (74) to perform power conversion between the high and low voltage batteries (72, 76); and
a battery management unit (78) to enter a low temperature charging mode based on internal temperature of the hybrid battery pack (70), and to charge one of the high or low voltage batteries (72, 76) using the other of the high or
low voltage batteries (72, 76) through the bidirectional converter (74) in the low temperature charging mode and depending on a state of charge (SOC) value of each of the high and low voltage batteries (72, 76).

2. The system as claimed in claim 1, wherein the battery management unit (78) is to charge one battery having a low SOC value from the other battery having a high SOC value among the high and low voltage batteries (72, 76) in the low temperature charging mode.

3. The system as claimed in claim 1, wherein the battery management unit (78) is to enter the low temperature charging mode when the internal temperature is lower than a preset reference internal temperature when the vehicle is turned off and to deactivate the low temperature charging mode when the vehicle is turned on.

4. The system as claimed in claim 3, wherein the preset reference internal temperature is between -10 °C and 10 °C, inclusive.

5. The system as claimed in claim 1, wherein the battery management unit (78) is to control a charging amount based on a comparison of the internal temperature with a previous internal temperature, when one of the high or low voltage batteries (72, 76) is charged in the low temperature charging mode.

6. The system as claimed in claim 5, wherein the battery management unit (78) is to increase the charging amount when the internal temperature is not increased from the previous internal temperature.

7. The system as claimed in claim 6, wherein the battery management unit (78) is to control a charging cycle based on a comparison of the internal temperature with a preset target temperature, when the internal temperature is increased from the previous internal temperature.

8. The system as claimed in claim 7, wherein the battery management unit (78) is to increase the charging cycle when the internal temperature is lower than the target temperature.

9. The system as claimed in claim 7, wherein the target temperature is between 10 °C and 30 °C, inclusive.

10. The system as claimed in claim 1, wherein the fuel cell pack (30) is to enter a low temperature ambient mode to supply the power to the high voltage battery (72) when an ambient temperature outside of the vehicle is lower than a preset ambient temperature when the vehicle is turned off.

11. The system as claimed in claim 10, wherein the reference ambient temperature is between -10 °C and 10 °C, inclusive.

12. The system as claimed in claim 10, wherein the fuel cell pack (30) is to output the power in the low temperature ambient mode until the SOC value of each of the high and low voltage batteries (72, 76) reach a corresponding preset target SOC value.

13. The system as claimed in claim 12, wherein the target SOC value is set to exceed 80
% of full-charge capacity.

14. The system as claimed in claim 12, wherein the battery management unit (78) is configured to charge the low voltage battery (76) from the high voltage battery (72) in the low temperature ambient mode.

15. The system as claimed in claim 1, wherein the hybrid battery pack (70) includes an external case (701) including the high and low voltage batteries (72, 76) and at least one open region (703), and a heat dissipating device (705) to physically open and close the at least one open region (703).
